Europäisches Patentamt

European Patent Office

Office européen des brevets

(11) Veröffentlichungsnummer : **0 520 999 B1**

(12) **EUROPÄISCHE PATENTSCHRIFT**

(45) Veröffentlichungstag der Patentschrift :
**12.04.95 Patentblatt 95/15**

(21) Anmeldenummer : **91903919.8**

(22) Anmeldetag : **20.02.91**

(86) Internationale Anmeldenummer :
**PCT/DE91/00135**

(87) Internationale Veröffentlichungsnummer :
**WO 91/15053 03.10.91 Gazette 91/23**

(51) Int. Cl.$^6$ : **H02M 3/335**

(54) **ELEKTRONISCHES SCHALTNETZTEIL.**

(30) Priorität : **17.03.90 DE 4008663**

(43) Veröffentlichungstag der Anmeldung :
**07.01.93 Patentblatt 93/01**

(45) Bekanntmachung des Hinweises auf die
Patenterteilung :
**12.04.95 Patentblatt 95/15**

(84) Benannte Vertragsstaaten :
**AT BE CH DE ES FR GB IT LI NL**

(56) Entgegenhaltungen :
**EP-A- 0 030 026**
**EP-A- 0 130 411**
**ELETRONIC DESIGN, Bd. 36, Nr. 20, 8. September 1988, HASBROUCK HEIGHTS, NEW JERSEY, Seite 111; C. SPEAROW: "Get Start-And-Run Voltages for Motors"**

(73) Patentinhaber : **Braun Aktiengesellschaft**
**Postfach 11 20**
**D-61466 Kronberg (DE)**

(72) Erfinder : **SCHWARZ, Gerhard**
**Eggestrasse 16**
**D-5990 Altena (DE)**

EP 0 520 999 B1

**Beschreibung**

Die Erfindung bezieht sich auf ein elektronisches Schaltnetzteil zur Speisung eines Verbrauchers aus einer Eingangsspannungsquelle, mit einem Sperrwandler mit einem Übertrager, dessen Primärwicklung in Reihe zur Kollektor-Emitter-Strecke eines ersten Transistors parallel zur Eingangsspannungsquelle und dessen Sekundärwicklung in Reihe zum Verbraucher und einer ersten Diode geschaltet ist, wobei der Emitter des ersten Transistors über einen ersten Widerstand mit Masse- oder Bezugspotential und die Basis des ersten Transistors an eine Steuerschaltung angeschlossen ist, mit einem parallel zum Verbraucher geschalteten Kondensator, wobei die Spannung an der dem Bezugspotential abgewandten Anschluß des Kondensators gleiche Polarität aufweist wie die Spannung am Verbindungspunkt des ersten Widerstandes mit dem ersten Transistor.

Elektronische Schaltnetzteile dienen zur Konstantspannungs- und/oder Konstantstromversorgung elektrischer oder elektronischer Geräte und sind in vielen Fällen als primär oder sekundär getaktete Sperr- oder Durchflußwandler bzw. Gegentaktwandler aufgebaut. Sie weisen in der Regel eine Gleichrichterschaltung mit nachgeschalteter Sieb- und Glättungsanordnung auf, an die ein Übertrager angeschlossen ist. In Reihe zur Primärwicklung des Übertragers ist ein elektronischer Schalter vorgesehen, der in Abhängigkeit von einer oder mehreren Regelgrössen ein- und ausgeschaltet wird, wobei die in dem Übertrager gespeicherte Energie beim Sperrwandler in der Sperrphase, beim Durchlaßwandler in der Durchlaßphase bzw. beim Gegentaktwandler sowohl in der Sperr- als auch in der Durchlassphase über eine entsprechend gepolte Diode an einen elektrischen Verbraucher abgegeben wird.

Ein Schaltnetzteil der eingangs genannten Art ist beispielsweise aus der EP 0 130 411 B1 bekannt. Das dort in Fig. 2 gezeigte Ausführungsbeispiel beinhaltet einen selbstschwingenden Sperrwandler, das heißt die an die Basis des ersten Transistors angeschlossene Steuerschaltung besteht dort im wesentlichen aus der Rückkopplung vom Sekundärkreis über einen Kondensator und einen Widerstand auf die Basis des ersten Transistors, sowie einem zweiten Transistor, dessen Kollektor-Emitter-Strecke zwischen der Basis des ersten Transistors und Bezugspotential liegt und dessen Basis mit der am ersten Widerstand abfallenden Spannung beaufschlagt wird. Die vorliegende Erfindung ist aber nicht auf ein Schaltnetzteil mit einem selbstschwingenden Sperrwandler beschränkt, sondern ist auch bei Schaltnetzteilen mit einem fremdgesteuerten Sperrwandler anwendbar. In diesem Fall besteht die Steuerschaltung beispielsweise aus einem Multivibrator, dessen Taktfrequenz oder dessen Puls/Pausen-Verhältnis, mit dem die Basis des ersten Transistors angesteuert wird, in Abhängigkeit von der Eingangsspannung, dem Primärstrom und/oder dem Sekundärstrom beeinflußt wird.

Solche Schaltnetzteile sind normalerweise, je nach Anwendungsfall, für einen bestimmten (maximalen) Betriebsstrom ausgelegt. In manchen Fällen benötigt der Verbraucher, der beispielsweise der Motor eines kleinen elektrischen Gerätes wie eines Rasierers oder eines Haarentfernungsgerätes sein kann, einen erheblich größeren Anlaufstrom als sein Betriebsstrom ist. In solchen Fällen müßte das Schaltnetzteil - nur wegen des kurzzeitig notwendigen höheren Anlaufstromes - für wesentlich größere Spitzenströme ausgelegt werden, als diese der Verbraucher im Betrieb erfordert, was infolge des höheren Primärspitzenstromes auch nach Beendigung der Anlaufphase zu einer erhöhten Verlustleistung führt. Beispielsweise müßte der im Primärkreis angeordnete erste Widerstand wesentlich verkleinert werden, damit ein höherer Primärspitzenstrom fließen kann, was dann vor allem zu höheren Verlusten im Schalttransistor führen würde.

Aufgabe der Erfindung ist es deshalb, ein elektronisches Schaltnetzteil der eingangs genannten Art so auszubilden, daß es einen erhöhten Anlaufstrom für den Verbraucher liefern kann, ohne daß hierzu während des Betriebs, das heißt nach Beendigung der Anlaufphase, ein höherer Primärspitzenstrom erforderlich ist.

Diese Aufgabe wird erfindungsgemäß dadurch gelöst, daß zwischen dem Verbindungspunkt des ersten Widerstandes mit dem ersten Transistor und dem Bezugspotential abgewandten Anschluß des Kondensators ein zweiter Widerstand angeschlossen ist.

Da der vom Sperrwandler gelieferte Strom proportional dem Emitterwiderstand des Schalttransistors ist, wird mit der erfindungsgemäßen Lösung auf einfache Art und Weise in der Anlaufphase, das heißt solange die Spannung am Verbraucher betragsmäßig kleiner als die am ersten Widerstand abfallende Maximalspannung ist, über den zweiten Widerstand, der dann über den Verbraucher dem ersten Widerstand parallel geschaltet ist, ein zusätzlicher Primärstrom geliefert.

In vorteilhafter Ausgestaltung der Erfindung wird dem zweiten Widerstand eine zweite Diode in Serie geschaltet.

Die Serienschaltung einer Diode hat den Vorteil, daß der zweite Widerstand selbsttätig ausgeschaltet wird, wenn die Spannung am Verbraucher die Höhe der am zweiten Widerstand abfallenden Maximalspannung erreicht hat.

Weitere vorteilhafte Ausgestaltungen sind den übrigen Unteransprüchen entnehmbar.

Anhand von in der Zeichnung dargestellten Ausführungsbeispielen wird die Erfindung näher erläutert. Es zeigen:

Fig. 1    das Prinzipschaltbild eines Ausführungsbeispiels der Erfindung,

Fig. 2    die Schaltungsanordnung eines Schaltnetzteils mit einem selbstschwingenden Sperwandler und

Fig. 3    den Primärspitzenstrom Ia in Abhängigkeit von der Verbraucherspannung Uo mit einem zweiten Widerstand (gestrichelte Kurve) und mit der Serienschaltung eines zweiten Widerstandes und einer zweiten Diode (durchgezogene Kurve).

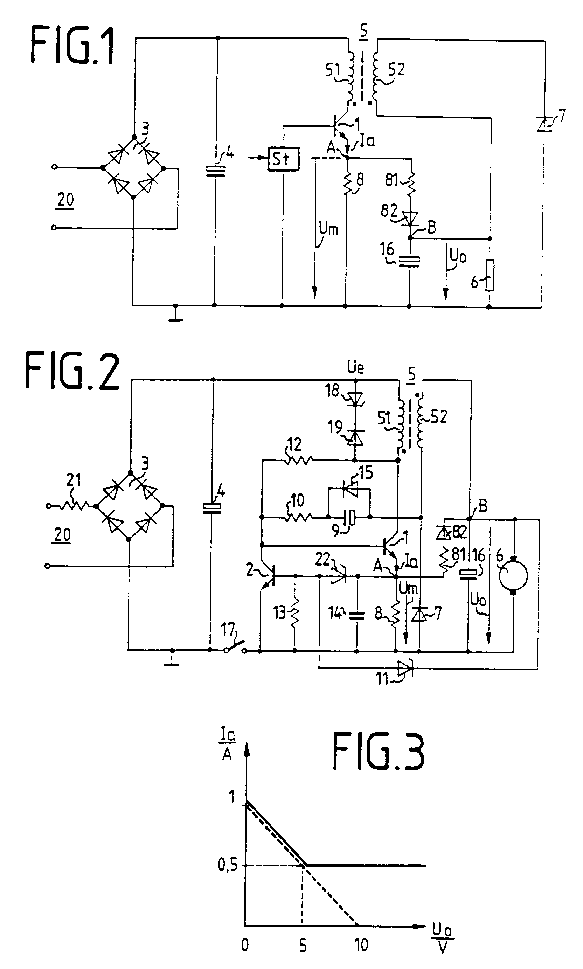

Das in Fig. 1 dargestellte Prinzipbild eines elektronischen Schaltnetzteils besteht aus einem über eine Gleichrichter-Brückenschaltung 3 aus einer Gleich- oder Wechselspannungsquelle 20 gespeisten Sperrwandler. Parallel zu den Eingangs-Gleichspannungsklemmen der Gleichrichter-Brückenschaltung 3 ist ein Eingangskondensator 4 zum Sieben und Glätten der Eingangsspannung geschaltet.

Parallel zum Eingangskondensator 4 ist die Reihenschaltung der Primärwicklung 51 eines Übertragers 5 mit der Laststrecke eines ersten Transistors 1 und eines ersten Widerstandes 8 geschaltet.

Die Sekundärwicklung 52 des Übertragers 5 ist in Reihe zu einer Diode 7 und einer Parallelschaltung eines Kondensators 16 und eines Verbrauchers 6 geschaltet.

Die Basis des Transistors 1 wird über eine Steuerschaltung St angesteuert. Die Konfiguration dieser Steuerschaltung St kann unterschiedlich sein und hängt auch davon ab, ob der Sperrwandler selbstschwingend oder fremdgesteuert ist.

Zwischen den Verbindungspunkt A des Emitters des Schalttransistors 1 mit dem Widerstand 8 und dem Bezugspotential abgewandten Anschluß B des Kondensators 16 und des Verbrauchers 6 ist die Serienschaltung eines Widerstandes 81 und einer Diode 82 angeordnet. Die Diode 82 kann auch eine Zenerdiode sein. Die Diode ist hier mit ihrem kathodenseitigen Anschluß dem Punkt B zugewandt, da der Transistor 1 ein NPN-Typ ist. Wird ein PNP-Typ verwendet, muß die Diode 82 mit ihrem kathodenseitigen Anschluß dem Punkt A zugewandt sein.

In Fig. 2 ist die detaillierte Schaltungsanordnung eines Schaltnetzteils mit einem selbstschwingenden Sperrwandler dargestellt.

Die Basis des Transistors 1 ist über einen Widerstand 12 mit dem einen Wicklungsende der Primärwicklung 51 des Übertragers 5, über die Reihenschaltung eines Rückkopplungskondensators 9 und eines Rückkopplungswiderstandes 10 mit dem einen Wicklungsende der Sekundärwicklung 52 des Übertragers 5 und mit dem Kollektor eines Transistors 2 verbunden, dessen Emitter über einen Schalter 17 an die eine Gleichspannungsklemme der Gleichrichter-Brückenschaltung 3 angeschlossen ist.

Die Basis des Transistors 2 ist über ein erstes Referenzelement in Form einer Zenerdiode 11 mit dem anderen Wicklungsende der Sekundärwicklung 52 des Übertragers 5 bzw. mit dem Ausgangskondensator 16 oder dem Gleichstrommotor 6 und über ein zweites Referenzelement in Form einer Zenerdiode 22 mit dem Emitter des ersten Transistors 1 verbunden. Parallel zur Basis-Emitter-Strecke des Transistors 2 ist ein Widerstand 13 und parallel zum Widerstand 8 ein Kondensator 14 vorgesehen.

Die parallel zur Primärwicklung 51 des Übertragers 5 geschaltete Reihenschaltung einer Zenerdiode 18 und einer in entgegengesetzter Durchlaßrichtung gepolten Diode 19 mit gemeinsamer kathodenseitiger Verbindung dient der Aufgabe, die sich aufgrund der Streuinduktivität bildenden Spitzen der Spannungs-Rückschlagimpulse zu beseitigen bzw. zu begrenzen.

Parallel zum Rückkopplungskondensator 9 ist eine Diode 15 mit anodenseitigem Anschluß an das eine Wicklungsende der Sekundärwicklung 52 des Übertragers 5 geschaltet.

Die Steuerschaltung St (Fig. 1) besteht also hier in Fig. 2 im wesentlichen aus dem Rückkopplungskonensator 9, dem Rückkopplungswiderstand 10 und dem Transistor 2. Statt des Transistors 2 kann zwischen die Basis des Transistors 1 und Bezugspotential auch eine Zenerdiode geschaltet werden. Diese Zenerdiode schaltet dann durch, wenn die am Widerstand 8 abfallende Spannung (Um) plus die Basis-Emitterspannung des Transistors 1 die Höhe der Zenerspannung der Zenerdiode erreicht haben. In diesem Fall muß die Regelschaltung an den Emitter des Transistors 1 angekoppelt werden.

Zwischen dem Emitter des Schalttransistors 1 (Punkt A) und dem Bezugspotential abgewandten Ende des Gleichstrommotors 6 (Punkt B) liegt die Serienschaltung des Widerstands 81 und der Diode 82.

Selbstverständlich kann parallel zum Gleichstrommotor 6 über eine entsprechende Schalteranordnung ein Akkumulator vorgesehen werden, der zum netzunabhängigen Betrieb des Gleichstrommotors 6 herangezogen wird.

Die Funktionsweise des Schaltnetzteils nach Fig. 2 soll nun zunächst so beschrieben werden, wie wenn der Widerstand 81 und die Diode 82 nicht vorhanden wären.

Bei Anlegen einer Netz-Wechselspannung an die Gleichrichter-Brückenschaltung 3 wird die gleichgerichtete Wechselspannung an den Glättungs- und Siebkondensator 4 gegeben, so daß der über die Primärwicklung 51 des Übertragers 5 und den Widerstand 12 fließende Strom über den Rückkopplungswiderstand 10 den Rückkopplungskondensator 9 auflädt, bis die Spannung an der Basis des Transistors 1 soweit angestiegen ist, daß der Transistor 1 leitend wird. Der dadurch bedingte Kollektorstrom fließt durch die Primärwicklung 51

3

des Übertragers 5 und induziert in der Sekundärwicklung 52 eine positive Spannung, die über den Rückkopplungskondensator 9 und den Rückkopplungswiderstand 10 an die Basis des Transistors 1 geführt wird und einen größeren Basisstrom hervorruft. Mit dem Einschalten des Transistors 1 steigt der durch die Primärwicklung 51 des Übertragers 5 fließende Strom infolge der Induktivität der Primärwicklung 51 linear an, bis über dem Wierstand 8 eine dem linear ansteigenden Strom proportionale Spannung abfällt, die von einer bestimmten Höhe an im Transistor 2 einen Basisstrom fließen läßt, wodurch der zweite Transistor 2 eingeschaltet und damit das Potential an der Basis des Transistors 1 auf Bezugspotential gezogen wird und somit der Transistor 1 abschaltet. Wähend der Sperrphase des Transistors 1 fließt die im Kern des Übertragers 5 gespeicherte magnetische Energie über die Sekundärwicklung 52 und die Diode 7 in den Ausgangskondensator 16 ab.

Übersteigt die am Ausgangskondensator 16 anstehende Spannung infolge des Ladezustandes des Ausgangskondensators 16 die Zenerspannung der Zenerdiode 11, so wird unabhängig von er am Widerstand 8 abfallenden Spannung der Transistor 2 ständig leitend gehalten, so daß die Basis des Transistors 1 ständig an Masse bzw. Bezugspotential anliegt, wodurch der Sperrwandler seinen Betrieb einstellt. Erst wenn die Spannung am Ausgangskondensator 16 infolge des Stromverbrauchs durch den parallel geschalteten Gleichstrommotor 6 so niedrig geworden ist, daß die Zenerspanung der Zenerdiode 11 unterschritten wird, hängt der Sperr- bzw. Leitzustand des Transistors 2 und damit des Transistors 1 wieder von der an dem Widerstand 8 abfallenden Spannung in bezug auf die Zenerspannung der Zenerdiode 22 ab und der Sperrwandler kann wieder anschwingen.

Die Zenerdiode 22 dient dabei dazu, den Transistor 2 dann einzuschalten, wenn die Zenerspannung der Zenerdiode 22 infolge der am Emitterwiderstand 8 ansteigenden Spannung überschritten wird.

Durch die Parallelschaltung der Diode 15 parallel zum Rückkopplungskondensator 9 kann der Sperrwandler bei Unterschreiten der Zenerspannung der Zenerdiode 11 sofort wieder anschwingen, da die an der Sekundärwicklung 52 des Übertragers 5 anstehende Ausgangsspannung über die Diode 15 sofort eine den Transistor 1 ansteuernde Polarität bereitstellt.

Beträgt nun beispielsweise der Primärspitzenstrom Ia = 0,5 A und hat der Emitterwiderstand 10 Ohm (ohne Widerstand 81 und Diode 82), beträgt die maximal am Emitterstand abfallende Spitzenspannung Um = 5V. Der im Sekundärkreis auftretende Spitzenstrom ist dem Primärspitzenstrom proportional. Ist der damit erreichbare arithmetische Mittelwert des Stroms durch den Verbraucher 6 nicht ausreichend, muß also der Primärspitzenstrom erhöht werden. Dies könnte beispielsweise durch Verkleinerung des Emitterwiderstandes 8 geschehen. Wenn aber der Verbraucher 6, beispielsweise ein Gleichstrommotor, nur in der Anlaufphase einen höheren Strom benötigt, würde diese Lösung auch im normalen Betriebszustand unnötig große Schaltverluste im Transistor 1 verursachen, da der Primärspitzenstrom gleich bleibt.

Um dem Verbraucher 6 einen höheren Anlaufstrom zu liefern, was bei einem Motor ein entsprechend größeres Anlaufdrehmoment hervorruft, wird nun zwischen dem Punkt A und dem Punkt B der Widerstand 81 und die Diode 82 eingefügt. Die Wirkungsweise wird anhand der Fig. 3 erläutert. Dort ist der Primärspitzenstrom Ia in Abhängigkeit von der am Verbraucher 6 und am Kondensator 16 anliegenden Spannung Uo beim Einschalten dargestellt. Die Spannung Uo ist also eine Funktion der Zeit. Der Widerstandswert des Widerstandes 81 und des Widerstandes 8 beträgt je 10 Ohm, die Betriebsspannung des Verbrauchers Uo = 10 V. Im Moment des Einschaltens beträgt nun der Primärspitzenstrom unter Vernachlässigung der Flußspannung der Diode 82 Ia = 1A statt - wie vorher - nur 0,5 A, da im Moment des Einschaltens die Spannung am Punkt B gegenüber Bezugspotential OV beträgt.

Es ist

$$Ia = \frac{Um}{R8} + \frac{Um - Uf - Uo}{R81}$$

wobei Uf die Durchlaßspannung der Diode 82 ist. Mit steigender Ausgangsspannung Uo (steigender Motordrehzahl) geht die Amplitude des Primärspitzenstromes Ia zurück.

Ist sowohl der Widerstand 81 als auch die Diode 82 zwischen den Punkten A und B angeordnet, zeigt die durchgezogene Kurve in Fig. 3 den Verlauf Ia als Funktion von Uo (unter Vernachläßigung von Uf). Ist die Spannung Uo = 5V erreicht, was der Maximalspannung Um am Widerstand 8 entspricht, ist der Primärspitzenstrom auf 0,5 A abgesunken. Steigt die Spannung Uo nun über 5 V, wird der Widerstand 81 selbsttätig ausgeschaltet, da die Diode 82 sperrt. Der Primärspitzenstrom Ia beträgt 0,5 A, wie vorher ohne Widerstand 81.

Die Diode 82 kann auch weggelassen werden. Es ergibt sich dann in Fig. 3 die gestrichelt gezeichnete Kurve. Übersteigt in diesem Fall die Spannung Uo die Spannung Um (bei 5 V), ist also das Potential am Punkt B größer als am Punkt A, erniedrigt sich zwar der Primärspitzenstrom Ia weiter, aber es fließt aus dem Sekundärkreis über den Widerstand 81 ein zusätzlicher Strom über den Widerstand 8 nach Bezugspotential. Es wird zwar ohne die Diode 82 der Zweck des höheren Anlaufstromes genauso erreicht, aber die Verlustleistung ist infolge des Stromflußes über den Widerstand 81 von B nach A im Betriebszustand größer als mit der Diode 82.

Ohne Diode 82 gilt:

$$U_o = \frac{R8 + R81}{R8} \, U_m$$

**Patentansprüche**

1. Elektronisches Schaltnetzteil zur Speisung eines Verbrauchers (6) aus einer Eingangsspannungsquelle (20), mit einem Sperrwandler mit einem Übertrager (5), dessen Primärwicklung (51) in Reihe zur Kollektor-Emitter-Strecke eines ersten Transistors (1) parallel zur Eingangsspannungsquelle (20) und dessen Sekundärwicklung (52) in Reihe zum Verbraucher (6) und einer ersten Diode (7) geschaltet ist, wobei der Emitter des ersten Transistors (1) über einen ersten Widerstand (8) mit Masse- oder Bezugspotential und die Basis des ersten Transistors (1) an eine Steuerschaltung (St) angeschlossen ist, mit einem parallel zum Verbraucher (6) geschalteten Kondensator (16), wobei die Spannung an der dem Bezugspotential abgewandten Anschluß (B) des Kondensators (16) gleiche Polarität aufweist wie die Spannung am Verbindungspunkt (A) des ersten Widerstandes (8) mit dem ersten Transistor (1), dadurch gekennzeichnet, daß zwischen dem Verbindungspunkt (A) des ersten Widerstandes (8) mit dem ersten Transistor (1) und dem Bezugspotential abgewandten Anschluß (B) des Kondensators (16) ein zweiter Widerstand (81) angeschlossen ist.

2. Schaltnetzteil nach Anspruch 1, dadurch gekennzeichnet, daß in Serie zu dem zweiten Widerstand (81) eine zweite Diode (82) geschaltet ist, deren anodenseitiger Anschluß dem Verbindungspunkt (A) des ersten Transistors (1) mit dem ersten Widerstand (8) zugewandt ist, wenn der erste Transistor (1) ein NPN-Typ ist, bzw. deren kathodenseitiger Anschluß dem Verbindungspunkt (A) zugewandt ist, wenn der erste Transistor (1) ein PNP-Typ ist.

3. Schaltnetzteil nach Anspruch 1, dadurch gekennzeichnet, daß der Sperrwandler selbstschwingend ist und daß die Steuerschaltung (St) aus der zwischen dem Sekundärkreis des Sperrwandlers und der Basis des ersten Transistors (1) angeordneten Serienschaltung eines Rückkopplungskondensators (9) und eines Rückkopplungswiderstandes (10) und aus einer zwischen der Basis des ersten Transistors (1) und Bezugspotential angeordneten Referenzspannungsquelle, die ab einer bestimmten Spannung leitend wird, besteht.

4. Schaltnetzteil nach Anspruch 3, dadurch gekennzeichnet, daß die Referenzspannungsquelle eine Zenerdiode ist.

5. Schaltnetzteil nach Anspruch 3, dadurch gekennzeichnet, daß die Referenzspannungsquelle die Kollektor-Emitter-Strecke eines zweiten Transistors (2) ist, dessen Basis mit dem Verbindungspunkt (A) des ersten Transistors (1) mit dem ersten Widerstand (8) in Verbindung steht.

6. Schaltnetzteil nach Anspruch 1, dadurch gekennzeichnet, daß der Verbraucher (6) ein Gleichstrommotor ist.

**Claims**

1. An electronic switching power supply for supplying power to a load (6) from an input voltage source (20), including a flyback converter with a transformer (5) having its primary coil (51) connected in series with the collector-emitter circuit of a first transistor (1) in parallel arrangement with the input voltage source (20), while its secondary coil (52) is connected in series with the load (6) and a first diode (7), with the emitter of the first transistor (1) being connected to chassis or reference potential through a first resistor (8) while the base of the first transistor (1) is connected to a control circuit (St), with a capacitor (16) in parallel arrangement with the load (6), with the voltage across the junction (B) of the capacitor (16) at the side remote from reference potential being of the same polarity as the voltage across the junction (A) of the first resistor (8) and the first transistor (1), characterized in that a second resistor (81) is placed between the junction (A) of the first resistor (8) and the first transistor (1) and the junction (B) of the capacitor (16) at the side remote from reference potential.

2. The switching power supply as claimed in claim 1, characterized in that a second diode (82) is connected in series with the second resistor (81), its anode being connected to the junction (A) of the first transistor (1) and the first resistor (8) if the first transistor (1) is an NPN type transistor, its cathode being connected to junction (A) if the first transistor (1) is a PNP type transistor.

3. The switching power supply as claimed in claim 1, characterized in that the flyback converter is self-oscillating, and the control circuit (St) is comprised of the series arrangement of a feedback capacitor (9) and a feedback resistor (10) placed between the secondary circuit of the flyback converter and the base of the first transistor (1), and of a reference voltage source which is arranged between the base of the first transistor (1) and reference potential and becomes conducting from a predetermined voltage.

4. The switching power supply as claimed in claim 3, characterized in that the reference voltage source is a Zener diode.

5. The switching power supply as claimed in claim 3, characterized in that the reference voltage source is the collector-emitter circuit of a second transistor (2) having its base connected to the junction (A) of the first transistor (1) and the first resistor (8).

6. The switching power supply as claimed in claim 1, characterized in that the load (6) is a dc motor.


**Revendications**

1. Alimentation électronique à découpage pour alimenter une charge (6) à partir d'une source de tension d'entrée (20), comprenant un convertisseur bloqué (à phase bloquée) avec un transformateur (5) dont l'enroulement primaire (51) est branché, en série avec le circuit collecteur-émetteur d'un premier transistor (1), parallèlement à la source de tension d'entrée (20), et dont l'enroulement secondaire (52) est branché en série avec la charge (6) et une première diode (7), l'émetteur du premier transistor (1) étant raccordé à travers une première résistance (8) au potentiel de la masse ou potentiel de référence et la base du premier transistor (1) étant raccordée à un circuit de commande (St), ainsi qu'un condensateur (16) branché en parallèle avec la charge (6), l'agencement étant tel que la tension sur la borne (B) du condensateur (16) opposée au potentiel de référence présente la même polarité que la tension au point de connexion (A) de la première résistance (8) au premier transistor (1), caractérisée en ce qu'une deuxième résistance (81) est montée entre le point de connexion (A) de la première résistance (8) au premier transistor (1) et la borne (B) du condensateur (16) opposée au potentiel de référence.

2. Alimentation à découpage selon la revendication 1, caractérisée en ce qu'une deuxième diode (82) est montée en série avec la deuxième résistance (81), diode dont la borne côté anode est dirigée vers le point de connexion (A) du premier transistor (1) à la première résistance (8) au cas où le premier transistor (1) est de type NPN et dont la borne côté cathode est dirigée vers le point de connexion (A) au cas où ce transistor (1) est de type PNP.

3. Alimentation à découpage selon la revendication 1, caractérisée en ce que le convertisseur bloqué est auto-oscillant et que le circuit de commande (St) est constitué du montage en série, disposé entre le circuit secondaire du convertisseur bloqué et la base du premier transistor (1), d'un condensateur de rétroaction (9) et d'une résistance de rétroaction (10), ainsi que d'une source de tension de référence disposée entre la base du premier transistor (1) et le potentiel de référence et devenant conductrice à partir d'une tension déterminée.

4. Alimentation à découpage selon la revendication 3, caractérisée en ce que la source de tension de référence est une diode de Zener.

5. Alimentation à découpage selon la revendication 3, caractérisée en ce que la source de tension de référence est le circuit collecteur-émetteur d'un deuxième transistor (2) dont la base est reliée au point de connexion (A) du premier transistor (1) à la première résistance (8).

6. Alimentation à découpage selon la revendication 1, caractérisée en ce que la charge (6) est un moteur à courant continu.

FIG.1

FIG.2

FIG.3